(19) **Europäisches Patentamt**

**European Patent Office**

**Office européen des brevets**

(11) **EP 1 061 266 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.$^7$: **F15B 15/12**, F16J 15/54

(21) Anmeldenummer: **00111788.6**

(22) Anmeldetag: **03.06.2000**

(54) **Schwenkmotor mit Dichtungsanordnungen**

Oscillating vane motor with sealing arrangement

Moteur rotatif oscillant avec dispositif d'étanchéité

(84) Benannte Vertragsstaaten:
**DE ES FR GB IT SE**

(30) Priorität: **17.06.1999 DE 19927623**

(43) Veröffentlichungstag der Anmeldung:
**20.12.2000 Patentblatt 2000/51**

(73) Patentinhaber: **Bayerische Motoren Werke Aktiengesellschaft**
**80809 München (DE)**

(72) Erfinder:
• **Gorski, Ekkehard**
**81827 München (DE)**
• **Jurr, Reinhold**
**81247 München (DE)**
• **Schmidt, Wolfgang**
**86899 Landsberg (DE)**

(56) Entgegenhaltungen:
| | |
|---|---|
| **EP-A- 0 321 280** | **DE-A- 19 725 412** |
| **DE-C- 556 968** | **DE-C- 4 337 815** |
| **US-A- 2 871 041** | **US-A- 3 411 812** |
| **US-A- 5 568 929** | **US-A- 5 875 750** |

**Beschreibung**

Die Erfindung betrifft einen Schwenkmotor mit der Abdichtung von dessen Arbeitskammern dienenden Dichtungsanordnungen, die jeweils aus einem im wesentlichen rechteckförmigen Dichtungs-Rahmenteil und einem von diesem ringförmig umschlossenen Dichtungs-Innenteil bestehen und die in durch das Schwenkmotor-Gehäuse und die Schwenkmotor-Welle begrenzten nutenförmigen Kammern derart angeordnet sind, daß zwei einander gegenüberliegende Kanten des Rahmenteiles in Axialrichtung des Schwenkmotores und die beiden anderen einander gegenüberliegenden Kanten des Rahmenteiles im wesentlichen in Radialrichtung des Schwenkmotores verlaufen, wobei das Dichtungs-Rahmenteil mit den Innenflächen seiner im wesentlichen in Radialrichtung verlaufenden Kanten und mit den Innenflächen seiner im wesentlichen in Axialrichtung verlaufenden Kanten direkt auf dem Dichtungs-Innenteil aufliegt.

Ein derartiger Schwenkmotor ist aus der DE 197 25 412 A1 bekannt. Bei diesem bekannten Schwenkmotor sind zusätzliche Dichtelemente in Form von Weichdichtringen vorgesehen, da grundsätzlich die Abdichtung von Schwenkmotoren ein besonderes schwer lösbares technisches Problem darstellt.

Ein weiterer Schwenkmotor mit Dichtungsanordnungen ist aus der DE 43 37 815 C1 bekannt. Bei dessen bekannter Dichtungsanordnung ist zwischen dem Dichtungs-Rahmenteil sowie dem Dichtungs-Innenteil ein umlaufender O-Ring als elastisches Vorspannelement vorgesehen, durch welches das Rahmenteil insbesondere in Radialrichtung des Schwenkmotors, aber auch in Axialrichtung desselben gegen die Wände der diese Dichtungsanordnung aufnehmenden nutenförmigen Kammer gedrückt wird, wobei die Wände dieser Kammer einerseits durch das Gehäuse des Schwenkmotors und andererseits durch die Schwenkmotor-Welle gebildet werden.

Während das Rahmenteil im bekannten Stand der Technik in Kunststoff (insbesondere Poly-Tetra-Fluorethylen = PTFE) und das Dichtungs-Innenteil ebenfalls in Kunststoff oder in Metall ausgeführt ist, besteht der Schwenkmotor selbst, d.h. dessen Gehäuse sowie dessen Motorwelle üblicherweise aus einem metallischen Werkstoff. Bekannterweise unterscheiden sich die Wärmeausdehnungskoeffizienten dieser verschiedenartigen Werkstoffe voneinander. So liegt der für das Schwenkmotor-Gehäuse sowie für die Schwenkmotor-Welle relevante thermische Ausdehnungskoeffizient $\alpha_{Stahl}$ von Stahl in der Größenordnung von $12 \cdot 10^{-6}$ 1/K, während der für das Dichtungs-Rahmenteil relevante thermische Ausdehnungskoeffizient $\alpha_{PTFE}$ von Kunststoff in der Größenordnung von $100 \cdot 10^{-6}$ 1/K liegt. Wird nun ein derartiger Schwenkmotor über einer relativ großen Temperaturspanne eingesetzt, so schrumpft bei einem auf eine Erwärmung folgenden Abkühlvorgang das Dichtungs-Rahmenteil in wesentlich stärkerem Maße als das Gehäuse und die Welle des Schwenkmotors sowie ggf. auch als das Dichtungs-Innenteil (nämlich falls letzteres ebenfalls in Stahl ausgeführt ist). Hierdurch kann nicht nur der grundsätzlich elastische O-Ring zwischen dem Rahmenteil und dem Dichtungs-Innenteil bis über seine Elastizitätsgrenze hinaus überdrückt werden, sondern es können sich auch unerwünschte Spalte zwischen der Dichtungsanordnung und den Wänden der bereits besagten nutenförmigen Kammer, welche vom Schwenkmotor-Gehäuse sowei der Schwenkmotor-Welle begrenzt wird und welche die Dichtungsanordnung aufnimmt, bilden. Solche Spalte verursachen dann unerwünschte Leckageverluste im Schwenkmotor.

An einem Schwenkmotor mit Dichtungsanordnungen nach dem Oberbegriff des Anspruchs 1 eine Maßnahme zur Verbesserung der Dichtwirkung aufzuzeigen, ist Aufgabe der vorliegenden Erfindung.
Die Lösung dieser Aufgabe ist dadurch gekennzeichnet, dass die für die betroffen Elemente verwendeten Werkstoffe derart ausgewählt sind, dass eine sich bei einer Temperaturänderung in Axialrichtung einstellende Längenänderung der Kammer im wesentlichen gleich einer sich in Axialrichtung einstellenden Längenänderung der Dichtungsanordnung ist und dass im oder am Dichtungs-Innenteil ein Zusatzelement vorgesehen ist, welches der Dichtungsanordnung und insbesondere dem Dichtungs-Rahmenteil eine im wesentlichen in Radialrichtung nach außen gerichtete Vorspannung verleiht. Vorteilhafte Aus- und Weiterbildungen sind Inhalt der Unteransprüche.

Mit den erfindungsgemäßen Merkmalen ist somit zumindest im wesentlichen gewährleistet, daß bei einer temperaturbedingten Längenänderung der Kammer die sich in Axialrichtung des Schwenkmotores einstellende Längenänderung der Dichtungsanordnung vom gleichen Ausmaß ist, so daß weiterhin eine optimale Dichtfunktion zur Verfügung steht. Dies ist zumindest in Axialrichtung bei relativ geringer Dicke des Rahmenteiles im wesentlichen gewährleistet, wenn für das Dichtungs-Innenteil ein Werkstoff gewählt wird, dessen Wärmeausdehnungskoeffiient geringer als derjenige des Schwenkmotor-Gehäuses ist; insbesondere auch unter Berücksichtigung der Tatsache, daß die Längenerstreckung der Kammer sowie der Dichtungsanordnung in Axialrichtung erheblich größer ist als diejenige in Radialrichtung. Auch ist die Aufrechterhaltung der Dichtfunktion unabhängig von Temperaturänderungen mit den erfindungsgemäßen Merkmalen zumindest im wesentlichen solange gewährleistet, als die durch Temperturänderungen bewirkte Kontraktion des Rahmenteiles geringer ist als die Elastizitätsgrenze desselben, d.h. solange eine Verformung des Dichtungs-Rahmenteiles im elastischen Bereich verbleibt.

Lediglich der Vollständigkeit halber sei in diesem Zusammenhang noch darauf hingewiesen, daß die Dichtfunktion der Dichtungsanordnung bzw. der Begriff der Dichtheit nicht absolut zu verstehen ist. Wesentlich ist lediglich, daß nur eine begrenzte Menge von Fluid bzw. Hydraulikmittel, welches von der Dichtungsanordnung am Austritt aus der Kammer gehindert werden soll, aus der besagten Arbeitskammer des Schwenkmotors austreten kann. Dies ist jedoch auch bei Vorliegen geringer Spalte zwischen der Dichtungsanordnung und den Kammerwänden gewährleistet, so lange das Hydraulikmittel aufgrund seiner ggf. hohen Viskosität, welche bekanntermaßen eine Folge geringer Temperatur ist, nicht durch diese Spalte hindurchdringen kann.

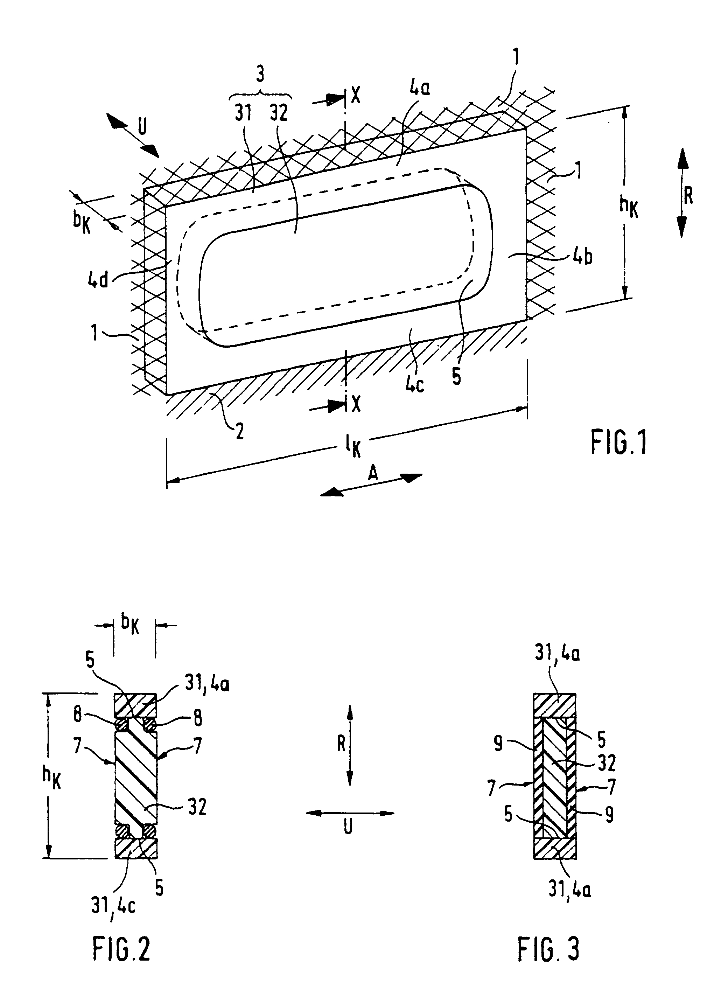

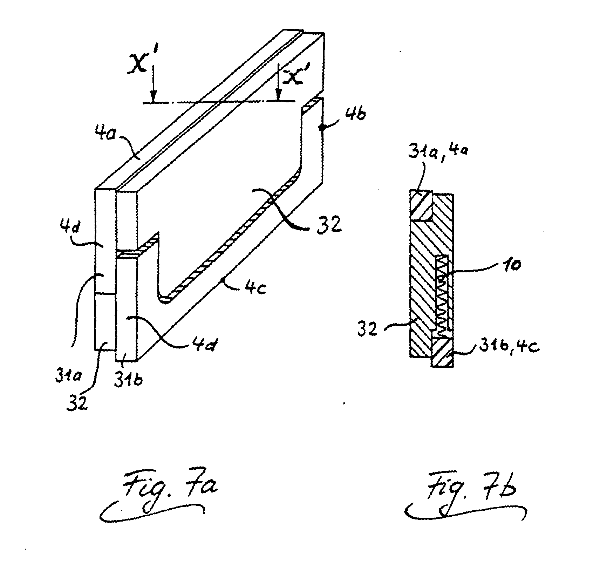

Im folgenden wird die Erfindung zunächst anhand der beigefügten **Figur 1** näher erläutert, die eine vereinfachte Perspektivansicht einer Dichtungsanordnung zeigt, welche in einem erfindungsgemäßen Schwenkmotor bevorzugt mehrfach vorhanden ist. Die weiteren **Figuren 2 - 6, 7b** zeigen lediglich prinzipiell vorteilhafte Weiterbildungen der Erfindung, und zwar jeweils in Form eines Querschnittes (Schnitt X-X aus **Fig. 1 bzw. Fig.7a**) durch eine erfindungsgemäße Dichtungsanordnung.

Bezugnehmend auf **Figur 1** ist mit der Bezugsziffer 1 das Gehäuse und mit der Bezugsziffer 2 die Welle eines ansonsten nicht näher dargestellten Schwenkmotores bezeichnet, bezüglich dessen detailliertem Aufbau ausdrücklich / beispielhaft auf die eingangs bereits genannte DE 43 37 815 C1 verwiesen wird. Da sich die vorliegende Erfindung insbesondere auf die in ihrer Gesamtheit mit der Bezugsziffer 3 bezeichnete Dichtungsanordnung bezieht, die üblicherweise mehrfach in einem derartigen Schwenkmotor vorhanden ist, ist in den beigefügten Figuren im wesentlichen nur diese Dichtungsanordnung 3 dargestellt. Dabei dient diese Dichtungsanordnung 3 der Abdichtung der einzelnen Arbeitskammern des Schwenkmotors, so wie dies in der genannten DE 43 37 815 C1 gezeigt und beschrieben ist. Dabei ist die Dichtungsanordnung 3 in einer nutenförmigen Kammer, die vom Gehäuse 1 sowie von der Welle 2 des Schwenkmotors begrenzt wird, angeordnet.

Die soeben genannte und die Dichtungsanordnung 3 aufnehmende Kammer besitzt das Längenmaß $l_K$, das in Axialrichtung A des Schwenkmotores gemessen wird. Weiterhin besitzt diese Kammer ein in Radialrichtung R des Schwenkmotores gemessenes Höhenmaß $h_K$. Schließlich erstreckt sich diese Kammer in Umfangsrichtung U des Schwenkmotores über ein gewisses Breitenmaß $b_K$, wobei analog der genannten DE 43 37 815 C1 die eigentliche Dichtungsanordnung 3 in Umfangsrichtung U betrachtet schmäler als dieses Breitenmaß $b_K$ sein kann, wenngleich dies nicht der vorliegenden Darstellung in den **Figuren 2 - 6** entspricht. In Axialrichtung A sowie in Radialrichtung R betrachtet füllt die Dichtungsanordnung 3 hingegen die Kammer aus, d.h. die Länge der Dichtungsanordnung 3 ist im wesentlichen gleich dem Längenmaß $l_K$ und die Höhe der Dichtungsanordnung 3 ist im wesentlichen gleich dem Höhenmaß $h_K$. Des besseren Verständnisses wegen sei noch erwähnt, daß die Umfangsrichtung U in **Figur 1** aufgrund der perspektivischen Darstellung im wesentlichen senkrecht zur Zeichenebene verläuft, während in den **Figuren 2 - 6, 7b** die Axialrichtung A direkt senkrecht zur Zeichenebene steht.

Die Dichtungsanordnung 3 besteht zumindest aus zwei Bauelementen, nämlich aus einem Dichtungs-Rahmenteil 31, das angepaßt an die nutenförmige bzw. quaderförmige Kammer in der von der Axialrichtung A sowie von der Radialrichtung R aufgespannten Ebene einen im wesentlichen rechteckförmigen Querschnitt besitzt, und weiterhin aus einem Dichtungs-Innenteil 32, das innerhalb des Dichtungs-Rahmenteiles 31 angeordnet ist. In der soeben genannten Ebene umschließt das Rahmenteil 31 mit seinen Kanten 4a, 4b, 4c, 4d das Dichtungs-Innenteil 32 somit ringförmig. Dabei steht das Innenteil 32 mit seinen Außenseiten in direktem Kontakt mit dem Rahmenteil 31, d.h. das Rahmenteil 31 liegt mit den Innenflächen 5 der Kanten 4a - 4d direkt auf dem Innenteil 32 auf. Des besseren Verständnisses wegen sei noch erwähnt, daß die einander gegenüberliegenden Kanten 4a und 4c des Rahmenteiles 31 in Axialrichtung A und die beiden anderen einander gegenüberliegenden Kanten 4b und 4d des Rahmenteiles 31 in Radialrichtung R verlaufen.

Damit die Dichtungsanordnung 3 ihre Dichtfunktion bezüglich des Schwenkmotors unter allen Umständen bzw. Randbedingungen erfolgreich erfüllen kann, muß diese Dichtungsanordnung 3 in der durch die Axialrichtung A sowie durch die Radialrichtung R aufgespannten Ebene betrachtet stets an den nicht näher bezeichneten Innenwänden der genannten Kammer anliegen bzw. in der Darstellung nach **Figur 1** müssen die Kanten 4a, 4b und 4d des Rahmenteiles 31 mit ihren nicht mit einer separaten Bezugsziffer versehenen Außenseiten stets am Schwenkmotor-Gehäuse 1 anliegen, während die untere Kante 4c des Rahmenteiles 31 stets an der Schwenkmotor-Welle 2 anliegen muß. Diese Bedingung soll insbesondere auch bei sämtlichen Temperaturen, die die betroffenen Elemente annehmen können, erfüllt sein.

Nun bestehen die betroffenen Elemente, nämlich das Rahmenteil 31 und das Innenteil 32 der Dichtungsanordnung 3 sowie das Gehäuse 1 und die Welle 2 des Schwenkmotors aber aus unterschiedlichen Materialien bzw. Werkstoffen und weisen demzufolge verschiedenartige Wärmeausdehnungskoeffizienten $\alpha$ auf. Insbesondere ist das Schwenkmotor-Gehäuse 1 sowie die Schwenkmotor-Welle 2 in Stahl ausgeführt und besitzt demzufolge den relevanten thermischen Ausdehnungskoeffizienten $\alpha_{Stahl}$, der in der Größenordnung von $12 \cdot 10^{-6}$ 1/K liegt. Das Dichtungs-Rahmenteil 31 hingegen ist im Hinblick auf seine Funktion in Kunststoff, bspw. PTFE ausgeführt und besitzt demzufolge den thermischen Ausdehnungskoeffizienten $\alpha_{PTFE}$, der in der Größenordnung von $100 \cdot 10^{-6}$ 1/K liegt.

Wird nun ein derartiger Schwenkmotor mit einer derartigen Dichtungsanordnung 3 über einem relativ großen Temperaturbereich eingesetzt, so muß zur Erfüllung der oben genannten Bedingung, nämlich daß das Rahmenteil 31 für alle möglichen Temperaturwerte in der durch die Axialrichtung A sowie durch die Radialrichtung R aufgespannten Ebene an den Wänden der Kammer bzw. am Gehäuse 1 sowie an der Welle 2 anliegt, zumindest im wesentlichen der folgende mathematische Zusammenhang erfüllt sein; hierbei handelt es sich um eine Beispielsrechnung bezüglich der bevorzugt hinsichtlich der thermischen Ausdehnung aneinander anzugleichenden axialen Erstreckungsrichtung :

$$ l_K \cdot \alpha_K \cong \{( l_{4d} + l_{4b} ) \cdot \alpha_{31} \} + l_{32} \cdot \alpha_{32} \, , $$

mit

$l_K =$ in Axialrichtung A gemessenes Längenmaß der die Dichtungsanordnung 3 aufnehmenden Kammer,

$\alpha_K =$ thermischer (Wärme-)Ausdehnungskoeffizient der die Kammer begrenzenden Wände, d.h. des Schwenkmotor-Gehäuses 1 sowie der Schwenkmotor-Welle 2,

$l_{4d} =$ in Axialrichtung A gemessenes Längenmaß der linken Kante 4d des Dichtungs-Rahmenteiles 31,

$l_{4b} =$ in Axialrichtung A gemessenes Längenmaß der rechten Kante 4b des Dichtungs-Rahmenteiles 31,

$\alpha_{31} =$ thermischer (Wärme-)Ausdehnungskoeffizient des Dichtungs-Rahmenteiles 31,

$l_{32} =$ in Axialrichtung A gemessenes Längenmaß des Dichtungs-Innenteiles 32,

$\alpha_{32} =$ thermischer (Wärme-)Ausdehnungskoeffizient des Dichtungs-Innenteiles 32.

In Worten ausgedrückt bedeutet dieser mathematische Zusammenhang, daß eine sich bei einer Temperaturänderung in Axialrichtung A einstellende Längenänderung der bereits genannten, die Dichtungsanordnung 3 aufnehmenden Kammer im wesentlichen gleich einer sich in Axialrichtung A einstellenden Längenänderung der Dichtungsanordnung 3 ist. Dabei können geringfügige Abweichungen von diesem Zusammenhang, der eine Angleichung der temperaturabhängigen Längenänderungen der Kammer einerseits und der Dichtungsanordnung 3 andererseits beschreibt, von der Dichtungsanordnung 3 verkraftet werden, solange deren Elemente nicht über deren Elastizitätsgrenze hinaus verformt werden.

Ist dieser mathematische bzw. dieser soeben in Worten ausgedrückte Zusammenhang erfüllt, so liegt die Dichtungsanordnung 3 unabhängig von den Bauteiltemperaturen der betroffenen Elemente in der durch die Axialrichtung A sowie durch die Radialrichtung R aufgespannten Ebene stets an den Wänden der die Dichtungsanordnung 3 aufnehmenden Kammer an, so daß stets eine optimale Dichtwirkung gewährleistet ist. Da weiterhin das Dichtungs-Rahmenteil 31 mit den Innenflächen 5 seiner Kanten 4a - 4d direkt auf dem Dichtungs-Innenteil 32 aufliegt, kann insbesondere durch geeignete Werkstoff- bzw. Materialauswahl für das Innenteil 32 eine Erfüllung dieses Zusammenhanges im wesentlichen sichergestellt werden.

Die meisten der im mathematischen Zusammenhang angegebenen Größen sind nämlich durch weitere Bedingungen vorgegeben, so insbesondere sämtliche Längenmaße $l_K$, $l_{4d}$, $l_{4b}$ und $l_{32}$ aufgrund einer vorgegebenen Dimensionierung des Schwenkmotors. Aufgrund der jeweiligen Funktion der betroffenen Bauelemente sind zumeist auch die Materialien bzw. der Werkstoff und somit auch die thermischen Ausdehnungskoeffizienten $\alpha_K$ und $\alpha_{31}$ für das Gehäuse 1 und die Welle 2 respektive für das Dichtungs-Rahmenteil 31 vorgegeben. Demzufolge ist der Werkstoff für das Dichtungs-Innenteil 32 derart zu wählen, daß dessen thermischer Ausdehnungskoeffizient $\alpha_{32}$ den genannten mathematischen bzw. in Worten ausgedrückten Zusammenhang zumindest im wesentlichen erfüllt. In anderen Worten ausgedrückt bedeutet dies, daß andernfalls sich bei einer Temperaturänderung einstellende unterschiedliche Längenausdehnungen der betroffenen Elemente durch eine geeignete Materialauswahl insbesondere des Dichtungs-Innenteiles 32 kompensiert werden.

Streng genommen erfüllt der oben genannte mathematische bzw. im kennzeichnenden Teil des Patentanspruches 1 in Worten ausgedrückte Zusammenhang die genannte Anforderung nur in Axialrichtung A betrachtet. Jedoch stellt sich auch in Radialrichtung R betrachtet mit Erfüllung dieses Zusammenhanges zumindest im wesentlichen bei sämtlichen möglichen Temperaturänderungen eine ausreichende Dichtwirkung der Dichtungsanordnung 3 ein. Gegebenenfalls kann die Dichtungsanordnung 3 hierzu in Radialrichtung betrachtet unter Übermaß in die besagte Kammer, die vom Schwenkmotor-Gehäuse 1 sowie von der Schwenkmotor-Welle 2 begrenzt wird, eingesetzt werden. Dann gleicht das in einem gewissen Bereich elastische Dichtungs-Rahmenteil mögliche Toleranzen bzw. unterschiedliche, durch Temperaturänderungen hervorgerufene Längenänderungen in Radialrichtung R selbsttätig aus, wobei auch geringe plastische Verformungsanteile zulässig sind (wegen des erstmaligen Einsetzens unter Übermaß).

Weiter gesteigert werden kann die Dichtwirkung der Dichtungsanordnung 3 bezüglich der Radialrichtung R, wenn im oder am Dichtungs-Innenteil 32 ein Zusatzelement vorgesehen ist, welches der Dichtungsanordnung 3 und insbesondere dem Dichtungs-Rahmenteil 31 eine im wesentlichen in Radialrichtung R nach außen gerichtete Vorspannung verleiht. Nach außen gerichtet bedeutet dabei vom Dichtungs-Innenteil 32 weggerichtet, d.h. die obere Kante 4a des Rahmenteiles 31 soll zum Schwenkmotor-Gehäuses 1 hin und die untere Kante 4c des Rahmenteiles 31 soll zur Schwenkmotor-Welle 2 hin vorgespannt sein. Mit dieser Maßnahme ist es weiterhin möglich, ein dynamisches Höhenspiel in der besagten Kammer, welches sich bei einem Betrieb des Schwenkmotors einstellen kann, auszugleichen.

An dieser Stelle sei noch auf einen besonderen Vorteil der vorgeschlagenen Dichtungsanordnung 3 gegenüber dem aus der bereits mehrfach genannten DE 43 37 815 C1 bekannten Stand der Technik hingewiesen. Obwohl auch hier irgendein im weiteren beschriebenes Zusatzelement zur Erzeugung einer Vorspannung vorhanden ist, kann dessen Schädigung aufgrund unterschiedlicher thermischer Längenausdehnungen nicht auftreten, da das Rahmenteil 31 mit den Innenflächen 5 aller seiner Kanten 4a - 4d direkt auf dem Dichtungs-Innenteil 32 aufliegt.

Dabei kann dieses die entsprechende Vorspannung erzeugende Zusatzelement verschiedenartig ausgebildet sein. Einige mögliche Varianten sind in den **Figuren 2 - 6, 7b** prinzipiell dargestellt und werden im folgenden näher beschrieben. Dabei entspricht jede dieser genannten Figuren einem Querschnitt bzw. dem Schnitt X-X aus **Fig.1** durch die Dichtungsanordnung 3. Dabei sei darauf hingewiesen, dass das Dichtungsrahmenteil 31 mit den Innenflächen 5 praktisch aller seiner Kanten 4a - 4d auf dem Dichtungs-Innenteil 32 aufliegt. Allgemein gilt, daß das Rahmenteil 31 zumindest in den Eckbereichen und an weiteren Stützpunkten auf dem Innenteil 32 aufliegen muß, wobei der Auflageabstand so klein sein muß, daß das Rahmenteil 31 bei Druckbelastung nicht ausbeult.

Beim Ausführungsbeispiel nach **Figur 2** ist das genannte Zusatzelement als zumindest ein an der Seitenfläche 7 des Dichtungs-Innenteiles 32 sowie an den Innenflächen 5 der in Axialrichtung A verlaufenden Kanten 4a, 4c des Rahmenteiles 31 anliegendes elastisches Elastomerelement 8 bspw. in Form eines O-Ringes, ausgebildet. Bevorzugt sind an beiden Seitenflächen 7 des Dichtungs-Innenteiles 32 derartige Elastomerelemente 8 vorgesehen. Die Funktion dieses bzw. dieser Elastomerelemente(s) 8 oder O-Ringe(s) 8 ist dabei teilweise die gleiche wie diejenige des im bekannten Stand der Technik nach der bereits mehrfach genannten DE 43 37 815 C1 vorgesehenen O-Ringes, d.h. die O-Ringe 8 spannen das Dichtungs-Rahmenteil 31 vom Dichtungs-Innenteil 32 weg nach außen. Dabei können jedoch abweichend vom bekannten Stand der Technik diese Elastomerelemente 8 nicht vom Rahmenteil 31 über ihre Elastizitätsgrenze hinweg überdrückt werden, da sich bei diesem Ausführungsbeispiel das Rahmenteil 31 sowohl in Axialrichtung A als auch in Radialrichtung R betrachtet auf dem Innenteil 32 abstützt, d.h. ersteres liegt - wie bereits gesagt - direkt auf letzterem auf.

Zur Erfüllung ihrer Funktion sind die Elastomerelemente 8 / O-Ringe 8 wie ersichtlich in nicht näher bezeichnete, an den Außenkanten der Seitenflächen 7 vorgesehene, umlaufende Aussparungen im Dichtungs-Innenteil 32 eingelegt. Vorteilhafterweise unterstützen diese Elastomerelemnete 8 zusätzlich die Dichtfunktion der Dichtungsanordnung 3.

Beim Ausführungsbeispiel nach **Figur 3** ist das genannte Zusatzelement als zumindest ein an der Seitenfläche 7 des Dichtungs-Innenteiles 32 sowie an den Innenflächen 5 der in Axialrichtung A verlaufenden Kanten 4a, 4c des Rahmenteiles 31 anliegender Gummibelag 9 ausgebildet. Bevorzugt sind an beiden Seitenflächen 7 des Dichtungs-Innenteiles 32 derartige Gummibeläge 9 vorgesehen. Die Funktion dieses Gummibelages 9 bzw. dieser Gummibeläge 9 ist dabei gleiche wie die des Elastomerelementes 8 beim Ausführungsbeispiel nach **Fig.2**. Auch hier liegt im übrigen das Rahmenteil 31 wieder mit den Innenflächen 5 aller seiner Kanten 4a - 4d auf dem Dichtungs-Innenteil 32 auf.

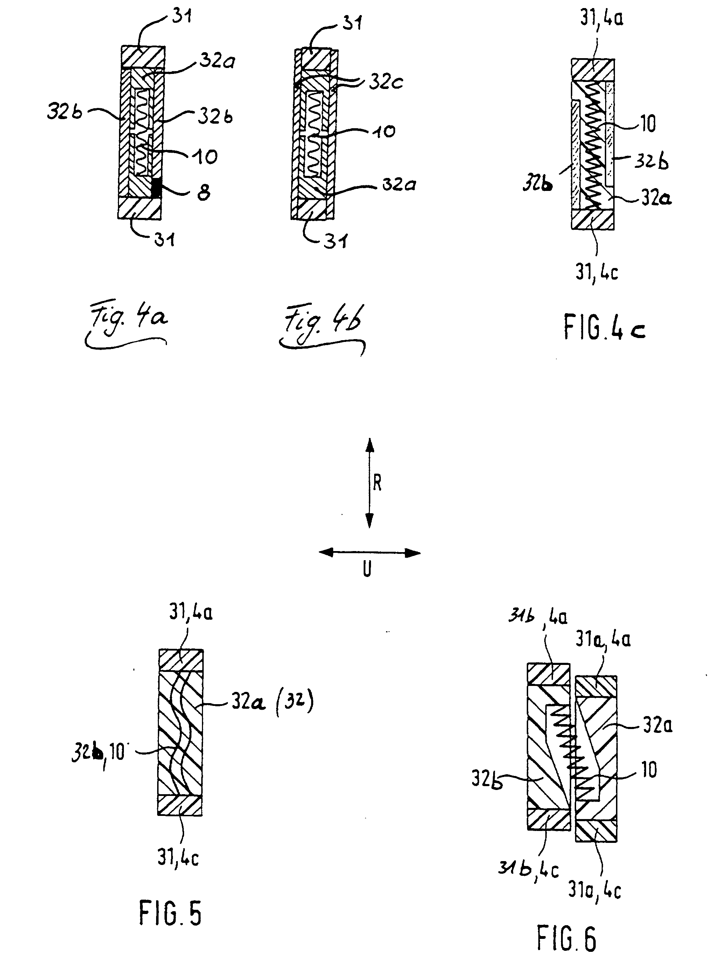

Beim Ausführungsbeispiel nach **Figur 4a** ist das genannte Zusatzelement als ein in das Dichtungs-Innenteil 32 eingebautes Federelement 10 ausgebildet. Dabei ist hier das Dichtungs-Innenteil 32 mehrteilig ausgebildet, d.h. zunächst sind neben einem ersten in Radialrichtung R federnden Dichtungs-Innenteil 32a zwei quasi außenliegende plattenförmige Dichtungs-Innenteile 32b vorgesehen. Zumindest das Dichtungs-Innenteil 32a erstreckt sich in Axialrichtung A (senkrecht zur Zeichenebene) und liegt mit seinen Endkanten direkt an den Kanten 4b sowie 4d des Dichtungs-Rahmenteiles 31 an. Dabei ist das Dichtungsinnenteil 32a wie ersichtlich aus zwei einander gegenüberliegenden Segmenten aufgebaut, zwischen denen das besagte Zusatzelement bzw. Federelement 10 angeordnet ist. Dabei erzeugt dieses Federelement 10 die in Radialrichtung R nach außen gerichtete Vorspannkraft auf die beiden Segmente des Dichtungs-Innenteiles 32a und damit auf das Rahmenteil 31.

Selbstverständlich können die plattenförmigen Dichtungs-Innenteile 32a, 32b auch andersartig angeordnet sein, bspw. parallel zu den Kanten 4a, 4c des Rahmenteiles 31 liegen. Die äußeren Innenteile 32b können in der einfachsten Form ohne ein separates Dichtelement ausgeführt sein, jedoch sind derartige zusätzliche dichtende Elastomerelemente (in **Fig.4a** ist ein solches unter der Bezugsziffer 8 dargestellt) insbesondere an den Kanten der Dichtungs-Innenteile 32b vorteilhaft.

Beim Ausführungsbeispiel nach **Fig.4b** ist das Dichtungs-Rahmenteil 31 dünner als beim soeben erläuterten Ausführungsbeispiel ausgeführt, wobei anstelle der Innenteile 32b sog. Dichtungsplatten 32c vorgesehen sind, die das Dichtungs-Rahmenteil 31 randseitig teilweise überdecken.

Wie **Fig.4c** zeigt, kann das Dichtungs-Innenteil 32 alternativ aus einem Gummiblock 32a bestehen, in den das besagte Zusatzelement bzw. Federelement 10 integriert ist, d.h. das Federelement 10 ist mit Gummi zu einem Block 32a umspritzt. Zur Gewährleistung der gewünschten Funktion sind auch hier wieder die beiden außenliegenden plattenförmigen Dichtungs-Innenteile 32b vorgesehen.

Auch beim Ausführungsbeispiel nach **Figur 5** ist im Innenraum des Rahmeteiles 31 ein einen Feder-Füllkörper 32a aufweisendes Federelement 10 vorgesehen, welches hier gleichzeitig das Dichtungs-Innenteil 32 bildet. Unter den Bezugsziffern 32b sind in Form von in Radialrichtung R gewellten Dichtungs-Innenteilen stellvertretend Kohlefasern oder Kevlarfasern oder dgl. dargestellt, die sich senkrecht zur Zeichenebene in Axialrichtung bis zu den beiden Kanten 4b, 4d des Rahmenteiles erstrecken und in dieser Axialrichtung den eingangs beschriebenen thermischen Kompensationseffekt bewirken. Aufgrund der in Radialrichtung R gewellten Formgebung hingegen ist es möglich, das durch diese Dichtungs-Innenteile 32a, 32b bzw. den genannten Feder-Füllkörper gebildete Dichtungs-Innenteil 32 in dieser Radialrichtung R betrachtet unter Vorspannung zu setzen.

Beim Ausführungsbeispiel nach **Figur 6** besteht die Dichtungsanordnung 3 aus zumindest zwei in Umfangsrichtung U des Schwenkmotors betrachtet nebeneinander liegenden Dichtungs-Rahmenteilen 31a, 31b mit jeweils zugeordneten Dichtungs-Innenteilen 32a, 32b, zwischen denen ein die beiden Rahmenteile 31a und 31b im wesentlichen in Radialrichtung R gegeneinander verspannendes Federelement 10 vorgesehen ist. Dieses Federelement 10 wirkt somit als Spreizfeder und drückt - wie ersichtlich - das linke Rahmenteil 31b nach oben zum Schwenkmotor-Gehäuse 1 hin, während das rechte Rahmenteil 31a nach unten an die Schwenkmotor-Welle 2 angedrückt wird. Hier ist also sowohl das Dichtungs-Rahmenteil 31 als auch das Dichtungs-Innenteil 32 mehrteilig ausgebildet.

Eine weitere Variante, bei welcher das Dichtungs-Innenteil 32 einteilig, hingegen das Rahmenteil 31 zweiteilig ausgebildet ist, ist in den **Figuren 7a, 7b** dargestellt. **Figur 7a** zeigt dabei eine Perspektivansicht ähnlich **Figur 1**, **Figur 7b** zeigt den Schnitt entsprechend der Schnittebene X'-X' aus **Figur 7a**. Wie ersichtlich sind hier zwei in Umfangsrichtung U nebeneinander liegende Rahmenteile 31a, 31b vorgesehen, wobei das erstgenannte Rahmenteil 31a nur die Kanten 4a, 4b und 4d besitzt, während das daneben liegende Rahmenteil 31b die Kanten 4b, 4c und 4d aufweist. Mit dem diese beiden Rahmenteile 31a, 31b verbindenden Dichtungs-Innenteil 32 ergibt sich wieder die gesamte Dichtungsanordnung 3. Dabei ist hier das Dichtungs-Rahmenteil 31b gegenüber dem Dichtungs-Innenteil 32 in Radialrichtung R bewegbar und stützt sich unter Zwischenlage eines Federelementes 10 an diesem ab. Dieses Federelement 10 verleiht dieser Dichtungsanordnung somit wieder die besagte Vorspannung in Radialrichtung mit Hilfe eines Zusatzelementes.

Selbstverständlich sind weitere Ausführungsformen möglich und es können eine Vielzahl von Details insbesondere konstruktiver Art durchaus abweichend von den gezeigten Ausführungsbeispielen gestaltet sein, ohne den Inhalt der Patentansprüche zu verlassen.

Bezugszeichenliste:

| | |
|---|---|
| 1 | Schwenkmotor-Gehäuse |
| 2 | Schwenkmotor-Welle |
| 3 | Dichtungsanordnung |
| 31 | (Dichtungs-)Rahmenteil |
| 31a, 31b | Teile des mehrteiligen Dichtungs-Rahmenteiles |
| 32 | (Dichtungs-)Innenteil |
| 32a, 32b, 32c | Teile des mehrteiligen Dichtungs-Innenteiles |
| 4a | (obere) Kante von 31, in Axialrichtung A verlaufend |
| 4b | (rechte) Kante von 31, in Radialrichtung R verlaufend |
| 4c | (untere) Kante von 31, in Axialrichtung A verlaufend |
| 4d | (linke) Kante von 31, in Radialrichtung R verlaufend |
| 5 | Innenfläche(n) von 4a - 4d |
| 7 | Seitenfläche(n) von 32 |
| 8 | Elastomerelement |
| 9 | Gummibelag |
| 10 | Federelement |
| | |
| A | Axialrichtung (des Schwenkmotors) |
| R | Radialrichtung (des Schwenkmotors) |
| U | Umfangsrichtung (des Schwenkmotors) |
| $b_K$ | Breitenmaß der Dichtungsanordnung 3 sowie der diese aufnehmenden Kammer |
| $h_K$ | Höhenmaß der Dichtungsanordnung 3 sowie der diese aufnehmenden Kammer |
| $l_K$ | Längenmaß der Dichtungsanordnung 3 sowie der diese aufnehmenden Kammer |

**Patentansprüche**

1. Schwenkmotor mit der Abdichtung von dessen Arbeitskammern dienenden Dichtungsanordnungen (3), die jeweils aus einem im wesentlichen rechteckförmigen Dichtungs-Rahmenteil (31) und einem von diesem ringförmig umschlossenen Dichtungs-Innenteil (32) bestehen und die in durch das Schwenkmotor-Gehäuse (1) und die Schwenkmotor-Welle (2) begrenzten nutenförmigen Kammern derart angeordnet sind, daß zwei einander gegenüberliegende Kanten (4a, 4c) des Rahmenteiles (31) in Axialrichtung (A) des Schwenkmotores und die beiden anderen einander gegenüberliegenden Kanten (4b, 4d) des Rahmenteiles (31) im wesentlichen in Radialrichtung (R) des Schwenkmotores verlaufen, wobei das Dichtungs-Rahmenteil (31) mit den Innenflächen (5) seiner im wesentlichen in Radialrichtung (R) verlaufenden Kanten (4b, 4d) und mit den Innenflächen seiner im wesentlichen in Axialrichtung (A) verlaufenden Kanten (4a, 4c) direkt auf dem Dichtungs-Innenteil (32) aufliegt **dadurch gekennzeichnet, dass** für die betroffenen Elemente verwendeten Werkstoffe derart ausgewählt sind, daß eine sich bei einer Temperaturänderung in Axialrichtung (A) einstellende Längenänderung der Kammer im wesentlichen gleich einer sich in Axialrichtung (A) einstellenden Längenänderung der Dichtungsanordnung (3) ist, und dass im oder am Dichtungs-Innenteil (32) ein Zusatzelement (8, 9, 10, 10') vorgesehen ist, welches der Dichtungsanordnung (3) und insbesondere dem Dichtungs-Rahmenteil (31) eine im wesentlichen in Radialrichtung (R) nach außen gerichtete Vorspannung verleiht.

2. Schwenkmotor nach Anspruch 1, **dadurch gekennzeichnet, daß** das Zusatzelement als zumindest ein an der Seitenfläche (7) des Dichtungs-Innenteiles (32) sowie an den Innenflächen (5) der in Axialrichtung (A) verlaufenden Kanten (4a, 4c) des Rahmenteiles (31) anliegendes Elastomerelement (8) oder Gummibelag (9) ausgebildet ist.

3. Schwenkmotor nach Anspruch 1, **dadurch gekennzeichnet, daß** das Zusatzelement als zumindest ein im oder am Dichtungs-Innenteil (32) vorgesehenes Federelement (10) ausgebildet ist.

4. Schwenkmotor nach einem der Ansprüche 1 - 3, **dadurch gekennzeichnet, dass** das Dichtungs-Rahmenteil (31) und / oder das Dichtungs-Innenteil (32) mehrteilig ausgebildet ist / sind.

**Claims**

1. An oscillating motor having working chambers sealed by sealing arrangements (3) each comprising a substantially rectangular seal-frame part (31) and a seal-inner part (32) surrounded by the seal-frame part and so disposed in groove-like chambers bounded by the housing (1) and the shaft (2) of the oscillating motor that two opposite edges (4a, 4c) of the frame part (31) extend in the axial direction (A) of the oscillating motor and the other two opposite edges (4b, 4d) of the frame part (31) extend substantially in the radial direction (R) of the oscillating motor, wherein the inner surfaces (5) of the edges (4b, 4d) extending substantially in the radial direction (R) of the seal-frame part (31) and the inner surfaces of the edges (4a, 4c) thereof extending substantially in the axial direction (A) bear directly on the seal-inner part (32), **characterised in that** the materials used for the components in question are chosen so that an alteration in the length of the chambers resulting from a temperature change in the axial direction (A) is substantially equal to an alteration in length of the seal arrangement (3) in the axial direction (A), and an additional component (8, 9, 10, 10') is provided in or on the seal-inner part (32) and subjects the sealing arrangement (3) and especially the seal-frame part (31) to prestress directed outwards substantially in the radial direction (R).

2. An oscillating motor according to claim 1, **characterised in that** the additional component is at least one elastomeric component (8) or rubber coating (9) abutting the side surface (7) of the seal-inner part (32) and the inner surfaces (5) of the edges (4a, 4c) of the frame part (31) extending in the axial direction (A).

3. An oscillating motor according to claim 1, **characterised in that** the additional component is at least one spring component (10) provided in or on the seal-inner part (32).

4. An oscillating motor according to any of claims 1 to 3, **characterised in that** the seal-frame part (31) and/or the seal-inner part (32) have a number of parts.

**Revendications**

1. Moteur rotatif oscillant avec des dispositifs d'étanchéité (3) servant à l'étanchement de ses compartiments de travail, dispositifs qui se composent d'un élément de bordure d'étanchéité (31), essentiellement rectangulaire, et d'un élément intérieur d'étanchéité (32) entouré de manière circulaire par cet élément de bordure et qui sont disposés dans les compartiments en forme de rainure, limitant le carter du moteur rotatif oscillant (1) et l'arbre du moteur rotatif oscillant (2), de manière à ce que deux arêtes opposées (4a, 4c) de l'élément de bordure (31) s'étendent dans la direction axiale (A) du moteur rotatif oscillant et à ce que les deux autres arêtes opposées (4b, 4d) de l'élément de bordure (31) s'étendent essentiellement dans la direction radiale (R) du moteur rotatif oscillant, l'élément de bordure d'étanchéité (31) reposant directement sur l'élément intérieur d'étanchéité (32) par les surfaces intérieures (5) de ses arêtes (4b, 4d) s'étendant essentiellement dans la direction radiale (R) et par les surfaces intérieures de ses arêtes (4a, 4c) s'étendant essentiellement dans la direction axiale (A), **caractérisé en ce que** les matériaux utilisés pour les éléments concernés sont sélectionnés de manière à ce qu'une modification de longueur du compartiment se réglant dans la direction axiale (A), en cas de modification de la température, soit essentiellement égale à une modification de la longueur du dispositif d'étanchéité (3) se réglant dans la direction axiale (A) et un élément supplémentaire (8, 9, 10, 10') est prévu, dans ou contre l'élément intérieur d'étanchéité (32), élément supplémentaire (8, 9, 10, 10') qui communique au dispositif d'étanchéité (3) et notamment à l'élément de bordure d'étanchéité (31) une précontrainte orientée vers l'extérieur, essentiellement dans la direction radiale (R).

2. Moteur rotatif oscillant selon la revendication 1, **caractérisé en ce que** l'élément supplémentaire indiqué est formé en tant qu'au moins un élément élastomère (8) ou un garnissage caoutchouc (9) posé contre la face latérale (7) de l'élément intérieur d'étanchéité (32) ainsi que sur les surfaces intérieures (5) des arêtes (4a, 4c) de l'élément de bordure (31) s'étendant dans la direction axiale (A).

3. Moteur rotatif oscillant selon la revendication 1, **caractérisé en ce que** l'élément supplémentaire est conçu en tant qu'au moins un élément élastique (10) prévu dans ou contre l'élément intérieur d'étanchéité (32).

4. Moteur rotatif oscillant selon l'une quelconque des revendications 1 - 3, **caractérisé en ce que** l'élément de bordure d'étanchéité (31) et/ou l'élément intérieur d'étanchéité (32) est/sont conçu(s) en plusieurs parties.

FIG.1

FIG.2

FIG.3

Fig. 4a

Fig. 4b

FIG. 4c

R

U

FIG. 5

FIG. 6

*Fig. 7a*

*Fig. 7b*